**Europäisches Patentamt**

**European Patent Office**

**Office européen des brevets**

(11) Veröffentlichungsnummer: **0 043 909**
A1

(12) **EUROPÄISCHE PATENTANMELDUNG**

(21) Anmeldenummer: **81104124.3**

(51) Int. Cl.³: **B 60 K 9/04**

(22) Anmeldetag: **29.05.81**

(30) Priorität: **10.07.80 DE 3026219**

(43) Veröffentlichungstag der Anmeldung:
**20.01.82 Patentblatt 82/3**

(84) Benannte Vertragsstaaten:
**BE IT**

(71) Anmelder: **Voith Getriebe KG**
**Alexanderstrasse 2**
**D-7920 Heidenheim(DE)**

(72) Erfinder: **Elsner, Ernst**
**Danziger Strasse 7**
**D-7922 Herbrechtingen(DE)**

(54) **Antriebsaggregat mit einer Antriebsmaschine und einem Schwungrad.**

(57) Ein Antriebsaggregat für ein Fahrzeug, insbesondere für Stadtverkehrs-Omnibusse, umfaßt ein stufenlos variables Getriebe (G) und vier Schaltkupplungen (31, 32, 33, 34). Die Schaltkupplung (31) verbindet eine Antriebsmaschine (M) mit einem Schwungrad (S). Die Schaltkupplung (32) verbindet das Schwungrad (S) mit einem Zwischengetriebeglied (Z). Die Schaltkupplung (33) verbindet die Antriebsmaschine (M) mit einer Abtriebswelle (30) und die Schaltkupplung (34) das Zwischengetriebeglied (Z) mit der Abtriebswelle (30). Damit ein möglichst einfaches variables Getriebe (G) verwendet werden kann, ist diesem ein Differntialgetriebe (D) zugeordnet, das drei Getriebeglieder (21, 22, 23) aufweist und vorzugsweise als ein Planetenradsatz ausgebildet ist. Das stufenlose Getriebe (G) ist aus zwei einzelnen, vorzugsweise hydrostatischen Einheiten (G₁ und G₂) zusammengesetzt. Von dem Planetenradsatz (D) ist vorzugsweise das Hohlrad (23) mit der Antriebsmaschine (M) verbunden, das Sonnenrad (21) mit der einen Hydrostatikeinheit (G₁) und der Planetenträger (22) mit dem Zwischengetriebeglied (Z) und gleichzeitig mit der anderen Hydrostatikeinheit (G₂).

Fig. 1

-1-

G 3800

Kennwort: "Energiespargetriebe"

Voith Getriebe KG

D-7920 Heidenheim

Antriebsaggregat mit einer Antriebsmaschine
und einem Schwungrad

Technisches Gebiet

Die Erfindung betrifft ein Antriebsaggregat, insbesondere für Fahrzeuge, mit einer Antriebsmaschine (M), einem Schwungrad (S) und einem
stufenlos variablen Getriebe (G), das einen ersten Getriebeanschluß
(11) und einen zweiten Getriebeanschluß (12) aufweist, ferner mit
einer Antriebswelle (30) und mit einem Zwischengetriebeglied (Z),
sowie mit vier Schaltkupplungen, die wie folgt angeordnet sind:

a) eine Schaltkupplung (31) zwischen der Antriebsmaschine (M) und
   dem Schwungrad (S),

b) eine Schaltkupplung (32) zwischen dem Schwungrad (S) und dem
   Zwischengetriebeglied (Z),

c) eine Schaltkupplung (33) zwischen der Antriebsmaschine (M) und
   der Abtriebswelle (30),

d) eine Schaltkupplung (34) zwischen dem Zwischengetriebeglied (Z)
   und der Abtriebswelle (30).

Stand der Technik

Ein solches Antriebsaggregat ist bekannt aus der DE-OS 27 10 532
(= US-PS 4.126.200), auf deren Fig. 1 nachfolgend Bezug genommen
wird. Die Antriebsmaschine ist dort mit 10, das Schwungrad mit 17,
das stufenlos variable Getriebe mit 15 und die Abtriebswelle mit
31 bezeichnet. Ein Zwischengetriebeglied wird dort durch die Zahnräder 35, 40 und 39 gebildet. Das variable Getriebe 15 ist einerseits an die Antriebsmaschine 10 und andererseits an das Zwischengetriebeglied 35, 40, 39 gekuppelt. Die oben genannten vier Schaltkupplungen sind in Fig. 1 der DE-OS durch die folgenden Getriebeteile
gebildet: 37 und 42; 42 und 39; 33 und 44; 35 und 44. Unter anderen
sind die folgenden Betriebszustände möglich:

1) Nur in einem Anfahr-Betriebsbereich (die Schaltkupplungen 37/42
   und 35/44 sind eingerückt) wird die Summe der Leistungen aus
   der Antriebsmaschine und aus dem Schwungrad durch das stufenlos variable Getriebe übertragen.

2) In einem daran anschließenden Betriebsbereich (Schaltkupplungen
   39/42 und 33/44 eingerückt) wird nur noch die vom Schwungrad
   abgegebene Leistung über das stufenlos variable Getriebe geführt; die Leistung der Antriebsmaschine wird dagegen direkt,
   also nahezu verlustfrei auf die Abtriebswelle übertragen.

Gemäß Seite 29 Absatz 2 der DE-OS können verschiedene Arten
stufenlos variabler Getriebe verwendet werden. Bevorzugt wird
jedoch ein leistungsteilendes hydrostatisches Getriebe, beschrieben in der Zeitschrift "Ölhydraulik und Pneumatik" 1971,
Seiten 385 bis 391. Solche leistungsverzweigende Getriebe haben
gegenüber den anderen stufenlos variablen Getrieben den Vorteil,
daß ein Teil der Leistung zwecks Verbesserung des Wirkungsgrades
rein mechanisch übertragen wird. Das heißt, der hydraulische
Leistungsanteil des stufenlos variablen Getriebes ist, abgesehen vom unmittelbaren Anfahrzustand, verhältnismäßig niedrig.

Wegen des rotierenden Gehäuses sind diese leistungsteilenden hydrostatischen Getriebe jedoch verhältnismäßig teuer. Vielfach stört auch die große Baulänge. Ein weiterer Nachteil besteht im folgenden: Durch die mechanische Kopplung der beiden hydrostatischen Einheiten über das gemeinsame, rotierende Gehäuse ist es nicht möglich, jede der beiden Einheiten für sich allein auf maximale Drehzahl oder auf minimales spezifisches Volumen zu optimieren.

Bei dem bekannten Antriebsaggregat ist vorgesehen, daß das Umschalten zwischen dem Anfahr- Betriebsbereich und dem anderen anschließenden Betriebsbereich dann stattfindet, wenn das hydrostatische Getriebe ein oberhalb von 1 liegendes Drehzahlverhältnis erreicht hat. Dadurch kann der Bereich, in dem der hydraulische Leistungsanteil des leistungsteilenden hydrostatischen Getriebes verhältnismäßig niedrig ist, noch vergrößert werden. Zugleich können gemäß Seite 33 der DE-OS die Drehzahlverhältnisse der wesentlichen Antriebsteile durch entsprechende Bemessung der Zahnräder 33, 35, 37 bis 40 derart an das Übersetzungsverhältnis des hydrostatischen Getriebes im Umschaltpunkt angepaßt werden, daß ein Umschalten vom Anfahrbetriebsbereich in den daran anschließenden Betriebsbereich (oder umgekehrt) ohne Relativdrehzahlen an den Schaltkupplungen erfolgen kann. Ein Nachteil ist jedoch, daß hierzu eine verhältnismäßig große Anzahl von Zahnradgetrieben (in der Regel 3 oder 4) erforderlich sind. Außerdem ist es nicht ohne weiteres möglich, den Verlauf der Leistungsaufteilung zu verändern. Dieser Verlauf hängt, wie schon erwähnt, vom Übersetzungsverhältnis des hydrostatischen Getriebes im Umschaltpunkt ab. Um das hydrostatische Getriebe möglichst gut auszunutzen, ist das vorgenannte Übersetzungsverhältnis in etwa gleich dem maximalen Übersetzungsverhältnis. Eine Änderung des Verlaufes der Leistungsaufteilung bedingt daher in der Regel eine Veränderung des maximalen Fördervolumens in dem hydrostatischen Getriebe. Hierbei ist gleichzeitig eine Änderung der Übersetzungsverhältnisse der Zahnradgetriebe erforderlich.

---

Aufgabenstellung und erfindungsgemäße Lösung.

Der Erfindung liegt die Aufgabe zugrunde, das eingangs angegebene Antriebsaggregat dahingehend zu verbessern, daß ein möglichst einfaches stufenlos variables Getriebe verwendet werden kann; zugleich soll der Verlauf der Leistungsaufteilung mit möglichst geringem Aufwand veränderbar sein.

Diese Aufgabe wird durch das im Patentanspruch 1 angegebene Antriebsaggregat gelöst. Dabei kommen zwei verschiedene Bauweisen in Frage, deren Merkmale in den Ansprüchen 2 und 4 angegeben sind.

Durch die Erfindung gelingt es, die folgenden Vorteile miteinander zu vereinigen:

a) Auf die Leistungsverzweigung im stufenlos variablen Getriebe kann verzichtet werden; d.h. es können einfache stufenlos regelbare Getriebeelemente, die im Falle hydrostatischer Einheiten einzeln anbaubar sind, verwendet werden. Stufenlos regelbare Getriebeelemente dieser Art sind, auch für höhere Leistungen, ohne Schwierigkeiten im Handel erhältlich.

b) Das gesamte Getriebe kann sehr kompakt ausgeführt werden, weil außer dem Differentialgetriebe in der Regel nur wenige Zahnräder erforderlich sind.

c) Der Verlauf der Leistungsaufteilung kann so gewählt werden, daß der Bereich mit kleinem Leistungsanteil im stufenlos regelbaren Getriebe verhältnismäßig groß ist.

d) Das Umschalten vom Anfahr-Betriebsbereich in den daran anschließenden Betriebsbereich (oder zurück) kann bei Drehzahlgleichheit in den Schaltkupplungen erfolgen.

Bei fast allen Ausführungsformen der Erfindung kann das stufenlose Getriebe in zwei Einzelmaschinen aufgelöst werden, die beide
bis zu ihrer maximal zulässigen Drehzahl betrieben werden können.
Ihre Baugröße kann also sehr klein gehalten werden. Die Anordnung
der beiden Einheiten des stufenlosen Getriebes ist weitgehend beliebig. Man kann sie z.B. nebeneinander anordnen, wodurch sich für
das gesamte Antriebsaggregat eine kurze Baulänge ergibt. Unter
Umständen können die Einheiten von außen an ein Getriebegehäuse angeflanscht werden. Dadurch sind sie im Falle einer
Reparatur einfach austauschbar.

Falls es erwünscht ist, den Verlauf der Leistungsaufteilung zu
verändern, so ist hierzu lediglich eine Änderung der Übersetzung
des Differentialgetriebes erforderlich. Es ist ein besonderer
Vorteil der Erfindung, daß hierbei das stufenlos variable Getriebe nicht verändert zu werden braucht.

Wie bei dem bekannten Antriebsaggregat (DE-OS 27 10 532) können
für das stufenlos variable Getriebe verschiedene bekannte Getriebebauarten eingesetzt werden. Nunmehr wird aber durch das zusätzlich vorgesehene Differentialgetriebe erreicht, daß bei allen
Getriebebauarten eine Leistungsteilung stattfindet und der
Wirkungsgrad hierdurch angehoben wird.

Durch geringfügige Abwandlung in der Getriebe-Anordnung können
unterschiedliche Kennlinien-Verläufe erzielt werden. So kann man
durch die Ausführung nach Anspruch 2 oder 3 erreichen, daß die
Kennlinie für den Leistungsanteil des stufenlos variablen Getriebes
im Anfahr-Betriebsbereich hyperbelartig abfällt und im anschließenden
Betriebsbereich linear ansteigt.

Dagegen kann durch die Ausführung nach Anspruch 4 erreicht werden, daß die vorgenannte Kennlinie im Anfahr-Betriebsbereich linear abfällt und daran anschließend hyperbelartig ansteigt. Diese Ausführung wird man im allgemeinen bevorzugen, weil hier der Bereich niedrigen Leistungsanteils im stufenlosen Getriebe größer ist.

Mit den im Anspruch 5 angegebenen Merkmalen wird erreicht, daß in dem Differentialgetriebe das mit der höchsten Drehzahl umlaufende Getriebeglied das Sonnenrad ist, also dasjenige Getriebeglied, welches die höchste Drehzahl am ehesten verträgt.

Ein wichtiger weiterführender Gedanke der Erfindung ist im Anspruch 6 angegeben. Durch diese Maßnahme wird erreicht, daß in dem stufenlos variablen Getriebe keine der beiden Getriebeeinheiten reversierbar, d.h. für beide Drehrichtungen ausgebildet sein muß. Dadurch wird z.B. die Verwendung eines mechanischen stufenlosen Getriebes möglich, ohne daß die oben beschriebenen Vorteile verloren gehen. Hierbei muß man unter Umständen in Kauf nehmen, daß beim Umschalten zwischen dem Anfahr- und dem folgenden Betriebsbereich die Drehzahl der Antriebsmaschine vom Getriebe her verändert wird. Dieser Nachteil könnte, wenn dies erforderlich erscheint, dadurch beseitigt werden, daß man - wie an sich bekannt - zwischen der Abtriebswelle einerseits und dem Zwischengetriebeglied und/oder der Antriebsmaschine andererseits noch ein Anpaßgetriebe anordnet.

Ausführungsbeispiele der Erfindung sind nachfolgend anhand der Zeichnung beschrieben. Darin zeigt:

    Fig. 1 ein Antriebsaggregat in schematischer Darstellung;

    Fig. 2 eine Abwandlung des Antriebsaggregates von Fig. 1;

    Fig. 3 eine Abwandlung des Antriebsaggregats von Fig. 2;

    Fig. 4 ein Diagramm mit einer Kennlinie des Antriebsaggregats nach Fig. 3;

    Fig 5 ein weiteres Ausführungsbeispiel der Erfindung.

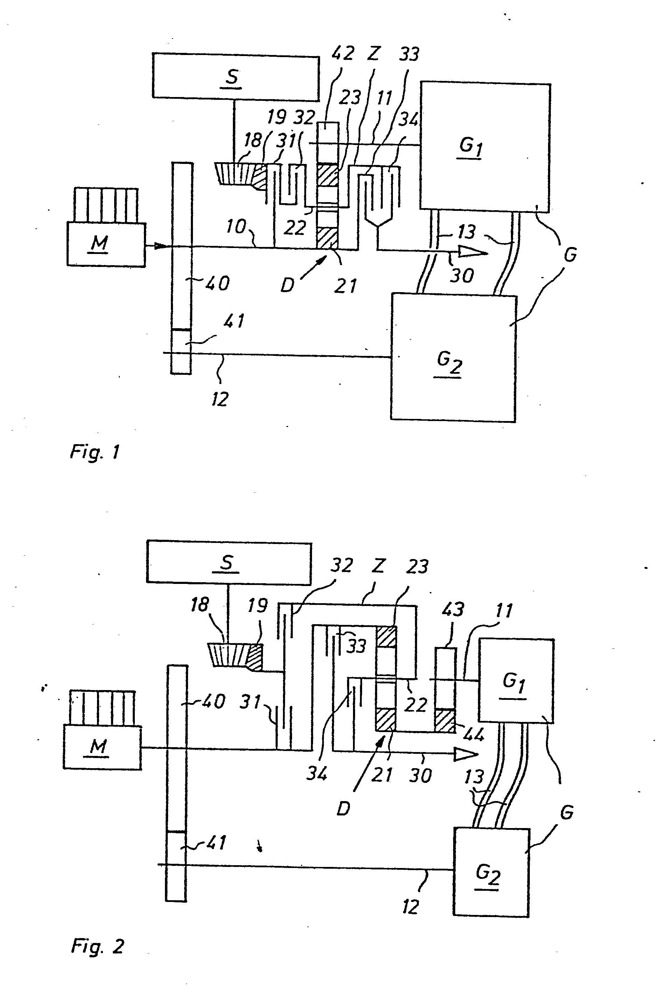

In den Figuren 1, 2 und 3 sind die folgenden Teile übereinstimmend wie folgt bezeichnet:

M   Antriebsmaschine, ausgebildet als Brennkraftmotor mit einer Motorwelle 10;

S   Schwungrad mit einem Untersetzungs-Kegelgetriebe, das ein an das Schwungrad gekoppeltes Ritzel 18 und ein Tellerrad 19 aufweist;

G   Stufenlos variables Getriebe, umfassend zwei einzeln im Antriebsaggregat angeordnete Hydrostatik-Einheiten $G_1$ und $G_2$, die beide wechselweise als Pumpe und als Motor arbeiten können, je eine Welle 11 bzw. 12 als Getriebeanschluß aufweisen und mittels Hydraulikleitungen 13 verbunden sind;

D   Differentialgetriebe mit Sonnenrad 21, Planetenträger 22 und Hohlrad 23;

Z   Zwischengetriebeglied, das als drehbare Trommel ausgebildet und an den Planetenträger 22 gekoppelt ist;

30 Antriebswelle;

31 Schaltkupplung zwischen der Motorwelle 10 und dem Tellerrad 19, das zum Untersetzungsgetriebe des Schwungrades S gehört;

32 Schaltkupplung zwischen dem Tellerrad 19 (Schwungrad S) und dem Zwischengetriebeglied Z;

33 Schaltkupplung zwischen der Motorwelle 10 und der Antriebswelle 30;

34 Schaltkupplung zwischen dem Zwischengetriebeglied Z und der Abtriebswelle 30.

Wie allegmein gekannt, kann bei Bedarf jede Schaltkupplung ersetzt werden durch eine Baueinheit umfassend einen Planetenradsatz und eine Bremse zum Stillsetzen des Hohlrades.

In Fig. 1 ist die Motorwelle 10 über ein Zahnradpaar 40/41 mit der Hydrostatik-Einheit $G_2$ verbunden. Außerdem ruht auf der Motorwelle 10 das Sonnenrad 21 des Differentialgetriebes D; das Hohlrad 23 kämmt dagegen auf seiner Außenseite mit einem Zahnrad 42, das auf der Welle 11 der Hydrostatik-Einheit $G_1$ ruht.

In Fig. 2 ist die Motorwelle 10 einerseits ebenfalls über ein Zahnradpaar 40/41 mit der Hydrostatik-Einheit $G_2$ verbunden, andererseits aber nunmehr mit dem Hohlrad 23. Die Hydrostatik-Einheit $G_1$ ist hier über ein Zahnradpaar 43/44 mit dem Sonnenrad 21 verbunden.

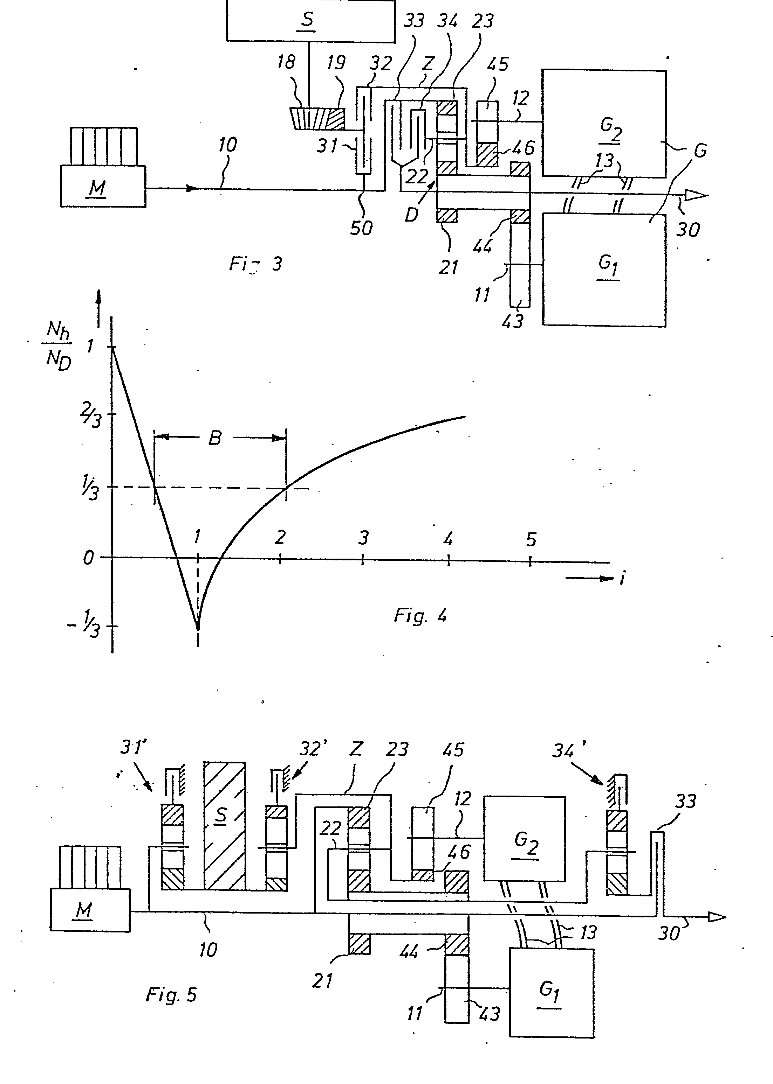

Letzteres trifft auch zu für die Fig. 3. Hier ist aber die Hydrostatik-Einheit $G_2$ über ein Zahnradpaar 45/46 mit dem Planetenträger 22 und damit auch mit dem Zwischengetriebeglied Z verbunden. Das Hohlrad 23 ist wieder mit der Motorwelle 10 gekoppelt.

In Figur 1 sind die Getriebeteile 19, 31, 32, 21, 22, 23, Z, 33 und 34 im Längsschnitt dargestellt, und zwar jeweils nur die oberhalb der Welle 10 und 30 befindliche Hälfte, während die untere Hälfte dieser Getriebeteile (der besseren Übersicht wegen) weggelassen ist. Eine ähnliche Darstellung wurde auch in den Figuren 2, 3 und 5 gewählt.

Die Wirkung der drei Ausführungsformen nach Figur 1, 2 und 3 ist sehr ähnlich. Sie wird nachfolgend anhand der Fig. 3 und 4 erläutert. In Fig. 4 ist aufgetragen die sogenannte Leistungsaufteilung $N_h/N_D$ (das ist das Verhältnis der hydraulischen Leistung $N_h$ zur gesamten durch das Differential D übertragenen Leistung $N_D$) über der Gesamt-Getriebe-Übersetzung i (das ist das Verhältnis $n_{30}/n_{19}$ der Drehzahlen der Abtriebswelle 30 und des Tellerrades 19).

Im Anfahr-Betriebsbereich sind die Schaltkupplungen 31 und 34 geschlossen und die Schaltkupplungen 32 und 33 geöffnet. Dadurch werden Motor- und Schwungrad-Leistung im Punkt 50 addiert und dem Hohlrad 23 des Differentialgetriebes D zugeführt. Von hier aus wird die Leistung teils über die Getriebeteile 22, 46, 45, 12, $G_2$, $G_1$, 43, 44, 21, 22 und 34 und teils vom Planetenträger 22 über die Schaltkupplung 34 direkt auf die Abtriebswelle 30 übertragen. Dabei ist die Leistungsaufteilung $N_h/N_D$ im Anfahrpunkt gleich 1; hier ist die Übersetzung des hydrostatischen Getriebes gleich Null. Die Leistungsaufteilung fällt dann rasch linear ab. Beim Wert $N_h/N_D =$ 0 kehrt sich die Drehrichtung einer der Hydrostatik-Einheiten um; hier ist im hydrostatischen Getriebe die Übersetzung gleich 1. Von hier fällt die Leistungsaufteilung weiter ab bis die Übersetzung i = 1 ist. Hier herrscht Drehzahl-Gleichheit in den Schaltkupplungen 32 und 33. Diese können somit nunmehr ohne Synchronisierarbeit eingerückt werden, wobei gleichzeitig die Kupplungen 31 und 34 gelöst werden. Die Motorleistung wird hierdurch über die Schaltkupplung 33 direkt auf die Abtriebswelle 30 übertragen. Die Schwungradleistung gelangt über die Schaltkupplung 32 in das Zwischengetriebeglied Z. Von hier wird sie teils über die Getriebeteile 46, 45, 12, G, 43, 44, D und 33 und teils direkt über das Differntial D und die Schaltkupplung 33 auf die Abtriebswelle 30 übertragen. Die Leistungsaufteilung $N_h/N_D$ der Schwungradleistung steigt, wie aus Fig. 4 ersichtlich, hyperbolisch an.

Bei welchem Wert $N_h/N_D$ der Umschaltpunkt liegt, kann durch das Verhältnis der Durchmesser von Sonnenrad 21 und Hohlrad 23 bestimmt werden. Bei den Anordnungen nach Fig. 1 und 2 ergeben sich im Anfahr-Betriebsbereich, abweichend von Fig. 4, steil abfallende hyberbelförmige Kennlinien und oberhalb von i = 1 linear aufsteigende Kennlinien.

Dabei liegt der Umschaltpunkt - aufgrund der unterschiedlichen Verknüpfungen des Differentialgetriebes D mit den übrigen Getriebeteilen - bei negativen Werten von $N_h/N_D$, die im Falle der Fig. 1 größer und im Falle der Fig. 2 kleiner als 1/2 sind.

In Fig. 4 ist mit dem Maßpfeil B der Bereich kleiner hydraulischer Leistung gekennzeichnet, dieser kann z.B. als derjenige Bereich definiert werden, in dem der absolute Betrag von $N_h/N_D$ kleiner als 1/3 ist. Wie schon erwähnt, ist der durchschnittliche Wirkungsgrad des Antriebsaggregats um so höher je größer der Bereich B ist.

In allen Ausführungen gemäß Fig. 1 bis 3 können noch andere Betriebszustände herbeigeführt werden: Wenn allein die Schaltkupplung 32 geschlossen ist, kann Antriebsenergie von der Antriebsmaschine M über die Getriebe D und G zum Schwungrad S (oder umgekehrt) übertragen werden. Eine Drehzahlerhöhung des Schwungrades S erfolgt jedoch vorzugsweise beim Bremsen des Fahrzeuges, also von der Abtriebswelle 30 her über die Getriebe G und D. Hierbei werden die Schaltkupplungen in gleicher Weise betätigt wie oben beschrieben in Zusammenhang mit den Fig. 3 und 4. Durch alleiniges Schließen der Schaltkupplung 34 kann Leistung von der Antriebsmaschine M allein über die Getriebe D und G zur Abtriebswelle fließen (Bergfahrt). Schließlich kann durch alleiniges Schließen der Schaltkupplung 33 Leistung von der Antriebsmaschine M direkt auf die Abtriebswelle übertragen werden (Überlandfahrt).

Das in Fig. 5 dargestellte Ausführungsbeispiel unterscheidet sich von den zuvor beschriebenen dadurch, daß drei Schaltkupplungen durch Schalteinheiten 31', 32', 34' ersetzt sind; diese umfassen je ein Planetengetriebe und eine Bremse, die das Hohlrad stillsetzen kann. Das Schwungrad S' ist hier auf einer Hohlwelle befestigt, die mit den Sonnenrädern der beiden Schalteinheiten 31' und 32' verbunden ist. Die Anordnung des Differentialgetriebes D und die Verknüpfung von dessen Getriebegliedern 21, 22, 23 ist gleich derjenigen von Fig. 3, desgleichen die Anordnung der Hydrostatik-Einheiten $G_1$ und $G_2$. Ebenso ist unverändert die Funktion der Kupplung 33 bzw. der Schalteinheit 34'. Lediglich deren Lage ist gegenüber der Fig. 3 verändert worden. Die Übersetzungen der Planetengetriebe der Schalteinheiten 31', 32', 34' können so gewählt werden, daß keine der beiden Hydrostatik-Einheiten reversibel (d.h. mit umkehrbarer Drehrichtung) ausgeführt werden muß und daß dennoch das Umschalten bei Synchrondrehzahlen stattfinden kann.

Abweichend von Fig. 5 könnte anstelle der Schalteinheit 34' eine einfache Schaltkupplung 34 belassen werden. Hierdurch würde zwar beim Umschalten von Getriebe her eine Veränderung der Motordrehzahl verursacht werden; dies könnte aber in der Regel ohne Schwierigkeiten in Kauf genommen werden.

Bevorzugte Anwendungen:

Das erfindungsgemäße Antriebsaggregat kann vor allem in Fahrzeugen, vorzugsweise in Omnibussen für den Stadtverkehr benutzt werden. Denn solche Fahrzeuge müssen sehr oft abgebremst werden, wobei die Bremsenergie im Schwungrad gespeichert und anschließend wieder nutzbar gemacht werden kann.

26.05.1981
Sh/ss

0043909

G 3800
Kennwort: "Energiespargetriebe"

Voith Getriebe KG
D-7920 Heidenheim

Patentansprüche
_____

1. Antriebsaggregat, insbesondere für Fahrzeuge, mit einer Antriebsmaschine (M), einem Schwungrad (S) und einem stufenlos variablen Getriebe (G), das einen ersten Getriebeanschluß (11) und einen zweiten Getriebeanschluß (12) aufweist, ferner mit einer Antriebswelle (30) und mit einem Zwischengetriebeglied (Z), sowie mit vier Schaltkupplungen, die wie folgt angeordnet sind:

a) eine Schaltkupplung (31) zwischen der Antriebsmaschine (M) und dem Schwungrad (S),

b) eine Schaltkupplung (32) zwischen dem Schwungrad (S) und dem Zwischengetriebeglied (Z),

c) eine Schaltkupplung (33) zwischen der Antriebsmaschine (M) und der Abtriebswelle (30),

d) eine Schaltkupplung (34) zwischen dem Zwischengetriebeglied (Z) und der Abtriebswelle (30),

dadurch gekennzeichnet, daß dem stufenlos variablen Getriebe (G) ein Differentialgetriebe (D) zugeordnet ist mit mindestens drei Getriebegliedern (21, 22, 23), die wie folgt angeordnet sind:

e) ein Getriebeglied (21 oder 23) ist mit der Antriebsmaschine (M) verbunden,

f) ein Getriebeglied (23 oder 21) ist mit dem ersten Getriebeanschluß (11) des stufenlos variablen Getriebes (G) verbunden und

0043909

g) ein Getriebeglied (22) mit mit dem Zwischengetriebeglied (Z) verbunden.

2. Antriebsaggregat nach Anspruch 1, dadurch gekennzeichnet, daß der zweite Getriebeanschluß (12) des stufenlos variablen Getriebes (G) mit der Antriebsmaschine (M) verbunden ist (Fig. 1 oder 2).

3. Antriebsaggregat nach Anspruch 2, worin das Differentialgetriebe (D) als ein Planetenradsatz ausgebildet ist mit Sonnenrad (21), Planententräger 22) und Hohlrad (23), dadurch gekennzeichnet, daß das Sonnenrad (21) mit der Antriebsmaschine (M), der Planetenträger (22) mit dem Zwischengetriebeglied (Z) und das Hohlrad (23) mit dem ersten Getriebeanschluß (11) des stufenlos variablen Getriebes (G) verbunden sind (Fig. 1).

4. Antriebsaggregat nach Anspruch 1, dadurch gekennzeichnet, daß der zweite Getriebeanschluß (12) des stufenlos variablen Getriebes (G) mit dem Zwischengetriebeglied (Z) verbunden ist (Fig. 3).

5. Antriebsaggregat nach Anspruch 2 oder 4, worin das Differentialgetriebe (D) als ein Planetenradsatz ausgebildet ist mit Sonnenrad (21), Planetenträger (22) und Hohlrad (23), dadurch gekennzeichnet, daß das Hohlrad (23) mit der Antriebsmaschine (M), der Planetenträger (22) mit dem Zwischengetriebeglied (Z) und das Sonnenrad (21) mit einem (11) der beiden Getriebeanschlüsse des stufenlos variablen Getriebes (G) verbunden sind (Fig. 2 oder 3).

6. Antriebsaggregat nach einem der Ansprüche 1 bis 5, worin zwischen dem Schwungrad (S) und der Antriebsmaschine (M) einerseits und zwischen dem Schwungrad (S) und dem Zwischengetriebeglied (Z) andererseits unterschiedliche Übersetzungen (Planetenradsätze 31' 32') vorgesehen sind, dadurch gekennzeichnet, daß die Übersetzungen so gewählt sind, daß der erste Getriebeanschluß (11) des stufenlos variablen Getriebes (G) in allen Betriebszuständen die gleiche Drehrichtung aufweist.

Heidenheim, 27.05.1981
Sh/ss

Fig. 1

Fig. 2

0043909

Fig. 3

Fig. 4

Fig. 5

Europäisches
Patentamt

**EUROPÄISCHER RECHERCHENBERICHT**

**0043909**
Nummer der Anmeldung

EP 81 10 4124

| | EINSCHLÄGIGE DOKUMENTE | | | KLASSIFIKATION DER ANMELDUNG (Int. Cl.³) |
|---|---|---|---|---|
| Kategorie | Kennzeichnung des Dokuments mit Angabe, soweit erforderlich, der maßgeblichen Teile | betrifft Anspruch | | B 60 K 9/04 |
| | FR - A - 2 365 066 (AUGSBURG)<br><br> * Seiten 6 bis 10; Figur * <br><br>-- | 1 | | |
| | DE - A - 2 444 564 (KORNER)<br><br> * Seiten 3 bis 8; Figur * <br><br>-- | 1 | | |
| | GB - A - 2 016 098 (AUGSBURG)<br><br> * Seiten 1 bis 6; Figur * <br><br>-- | 1 | | RECHERCHIERTE SACHGEBIETE (Int. Cl.³) |
| | US - A - 3 870 116 (SELIBER)<br><br> * Spalten 1 bis 9; Figur * <br><br>-- | 1 | | B 60 K<br>F 03 G<br>B 60 T<br>F 16 D |
| D,A | DE - A - 2 710 532 (SCIENTIFIC)<br><br>---------- | 1 | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 21-09-1981 | FLORES |

EPA form 1503.1   06.78